# EUROPEAN PATENT APPLICATION

(11) **EP 4 850 528 A1**
(43) Date of publication of application: **09.12.2026**
(21) Application number: 26158013.8
(22) Date of filing: 12.02.2026
(51) Int. Cl.: A01K 85/12, A01K 85/14

(54) **FISHING LURE AND BLADE**

(30) Priority: 03.03.2025 JP 2025033283
(71) Applicant: U, Cho, Hitachiota City, Ibaraki 313-0025 (JP)
(72) Inventor: U, Cho, Hitachiota City, Ibaraki 313-0025 (JP)
(74) Representative: Hasegawa, Kan

(57) **Abstract**

A lure includes an elongated body (10) curved to form a first curved portion (11) and a second curved portion (12). The first curved portion is part of a helical curved portion, and the second curved portion is part of a substantially conical or pyramidal portion. . A first connection structure (13) is provided on the first curved portion, and a second connection structure (14) is provided on the second curved portion. One of the connection structures is connected to a rotational member (20), and the other is connected to a hook (30). The lure does not include a rotation shaft (60), and rotates about a virtuaI rotation axis (A) passing through one or both of the connection structures in response to rotation of the rotational member. A lure comprises a rotation shaft (60). A blade comprises an elongated body, first and second curved portions and first and second connection structures.

## Description

### RELATED APPLICATIONS

This application claims priority from Japanese Patent Application JP 2025-033283 filed on Mar. 3, 2025, the entire contents of which are hereby incorporated by reference.

### TECHNICAL FIELD

The present invention relates to a lure (artificial bait) and a blade that can achieve a fish-like appearance when rotated.

### BACKGROUND ART

Conventionally, artificial lures have been used in fishing to attract fish in place o f natural bait, such as worms, small fish, and insects. The use of lures eliminates the use of natural bait, thereby allowing fishing to be enjoyed more conveniently. Various types of lures, such as minnows, crankbaits, spinners, spoons, and soft lures, have been developed. These lures are designed with consideration given to materials, shapes, colors, and movements so as to imitate natural bait, and are developed so that an optimal lure can be selected depending on the species of fi sh to be caught and the fishing environment.

Metal lures have high durability, and in particular, rotating-type lures are capable of attracting fish even from a distance due to the hydrodynamic vibration and lig ht reflection generated during rotation. Because metal lures are also easy to man ufacture, various shapes have been developed. For example, a spinner is provide d with a rotating metal blade, and the reflection of light and the subtle vibrations and splashes generated as the blade cuts through the water effectively attract fis h. Numerous lures that rotate in water, such as spinners, have been developed, and various shapes have been devised to achieve effective rotational performance.

Patent Documents 1 and 2 disclose a lure having a helical body that rotates ab out a rotation axis corresponding to the longitudinal center line of the body. With these structures, when the lure is retrieved underwater, below the surface, or on the water surface, the helical curved portion of the lure can freely rotate about th e rotation axis, thereby effectively attracting fish.

Further, Patent Document 3 discloses a lure in which holes are formed near bot h ends of an elongated plate, the plate is flexed, and a shaft is inserted through the two holes so that the plate rotates about the shaft as a rotation axis. With th is structure, a rotating-type lure having a rotating blade can be achieved in a sim ple configuration, and the radius of rotation around the rotation axis can be relati vely small.

### CITATION LIST

### Patent Documents

[Paten Document 1] US-4891901-B
[Paten Document 2] US-6108961-B
[Paten Document 3] JP-U-3169104

### SUMMARY OF THE INVENTION

### Technical Problem

In the lures disclosed in Patent Documents 1 and 2, although the helical curved portion is capable of freely rotating about the rotation axis, the water resistance acting on the lure is relatively small, and therefore the rotation speed remains lo w even when the lure is retrieved rapidly. As a result, the reflection of light and the hydrodynamic vibration generated are weak. In addition, the swimming posture of the lure in water is often inclined rather than maintained in a horizontal state. When the lure assumes such an inclined posture during retrieval, its appearance becomes unnatural, and the lure may fail to resemble a fish.

In the lure disclosed in Patent Document 3, the plate primarily oscillates in wate r and only occasionally rotates about the shaft as the rotation axis. However, the appearance of the plate during rotation does not resemble that of a fish, and deb ris in the water tends to become entangled with the plate. Moreover, because the plate rotates due to centrifugal force acting thereon, the rotational speed is relati vely low.

In response to the above issues, one or more aspects of the invention are direc ted to a lure and a blade that can achieve high rotational speed, exhibit fish-like appearances of various sizes, produce strong light reflection and water vibration, and maintain a stable horizontal swimming posture in water.

### Solution to Problem

One aspect of the present invention provides a lure including an elongated body having opposite end portions in a polygonal shape or in a curved shape. The elongated body is curved and includes a first curved portion and a second curved portion. The first curved portion is part of a helical curved portion, and the second curved portion is part of a substantially conical or pyramidal portion. The lure includes a first connection structure on the first curved portion, and a second connection structure on the second curved portion. One of the first connection structure or the second connection structure is connected to a rotational member, and the other is connected to a hook. The lure does not include a rotation shaft, and rotates about a virtual rotation axis passing through at least one of the first connection structure or the second connection structure in response to rotation of the rotational member.

### Advantageous Effects of Invention

The lure and blade according to the present invention can achieve a high rotational speed and exhibit fish-like appearances of various sizes, allowing the user to select the most suitable form depending on the target fish species and fishing environment. In particular, because the lure can maintain a stable horizontal swimming posture in water, it can move in a straight and natural manner, thereby more closely achieving a swimming motion that resembles that of an actual fish. Furthermore, the curved portions of the lure and blade provide strong light reflection and pronounced water vibrations, enabling the lure to effectively attract fish.

### BRIEF DESCRIPTION OF DRAWINGS

FIG. 1A is a front view of a main body of a lure according to a first embodimen t of the present invention, and FIG. 1B is a rear view of the main body of the lu re.
FIG. 2A is a left side view of the main body of the lure shown in FIG. 1, and F IG. 2B is a right side view of the main body of the lure.
FIGS. 3A, 3B, and 3C are explanatory views of the main body of the lure show n in FIG. 1, illustrating a substantially rectangular shape in FIG. 3A, an arcuate ( bow-shaped) form in FIG. 3B, and shapes in a short-side direction in FIG. 3C.
FIGS. 4A and 4B are explanatory views illustrating a curved configuration of the main body of the lure shown in FIGS. 1A and 1B.
FIGS. 5A, 5B, and 5C are explanatory views illustrating a method for forming th e curved configuration of the main body shown in FIGS. 4A and 4B.
FIGS. 6A and 6B are explanatory views illustrating a method for forming the fine adjustment portions of the lure main body shown in FIGS. 1A and 1B.
FIGS. 7A, 7B, and 7C are explanatory views showing positions of the connection structure on the main body of the lure shown in FIGS. 1A and 1B.
FIG. 8 is a perspective view of a lure according to a second embodiment of the present invention.
FIG. 9 is a perspective view of a lure according to a third embodiment of the pr esent invention.
FIG. 10A is an explanatory view of the lure according to the first embodiment in the state in which the lure rotates at high speed, and FIG. 10B is an explanator y view of the lure according to the third embodiment in the state in which the lur e rotates at high speed.
FIGS. 11A and 11B are explanatory views illustrating examples of use of a blad e according to a fourth embodiment of the present invention.
FIGS. 12A and 12B are explanatory views illustrating examples of use of the bla de according to the fourth embodiment of the present invention.

### Detailed Description of the Invention

Hereinafter, embodiments of the present invention will be described with referenc e to the drawings. In the drawings, identical reference numerals are assigned to i dentical or corresponding parts, and duplicate descriptions of such parts are omitt ed. As used herein, the term "lure" refers to a fishing lure (artificial bait) used to attract fish. As used herein, the term "blade" refers to a curved plate-shaped com ponent configured to rotate in water or air. In addition, the term "rotation" is used to include "helical rotation."

### First Embodiment

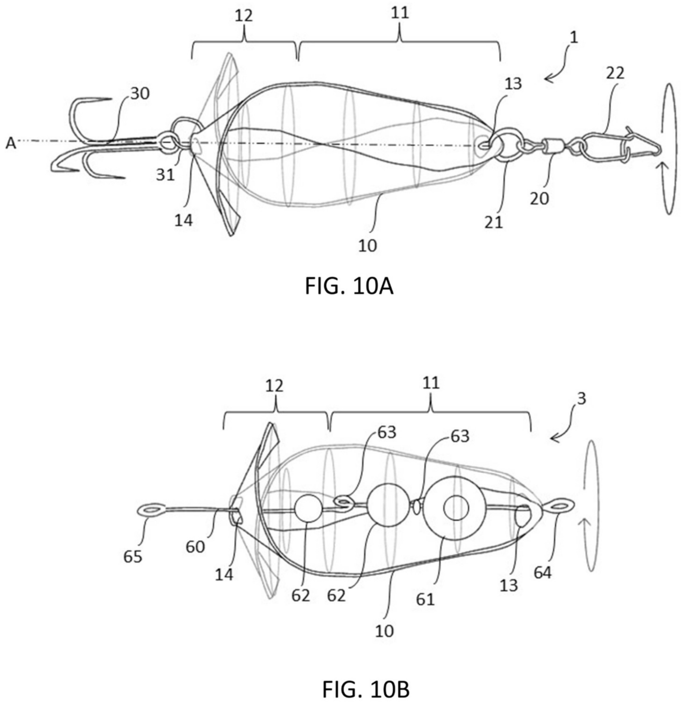

A first embodiment of the present invention will be described with reference to F IGS. 1A to 7 and FIG. 10A. A lure 1 according to one or more embodiments of t he present invention includes an elongated body 10 bent into a curved shape, su ch that when the lure rotates, it exhibits a motion profile resembling that of a fis h. The material of the body 10 is not particularly limited, and metals (e.g., alumin um, stainless steel, or iron), synthetic resins, rubber, or the like may be used. By varying the dimensions, material, and curvature angles of the body 10, the lure i s capable of realizing a variety of fish-like appearances. In addition, the rotational speed, retrieval speed, and sinking speed of the lure 1 can be adjusted by modi fying the curvature angles and the material properties. In this embodiment, a met al body 10 is used, as it is easy to form, capable of reflecting light, and highly r esistant to corrosion.

The dimensions of the body 10, when made of metal, may be selected as appro priate within the normal range for the size and weight of the lure, and are not pa rticularly limited. In the present embodiment, the body 10 has a thickness of appr oximately 0.5 mm, a length of approximately 80 mm in the longitudinal direction, and a width of approximately 10 mm in the short-side direction. However, the dim ensions of the body 10 are not limited to those described in this embodiment.

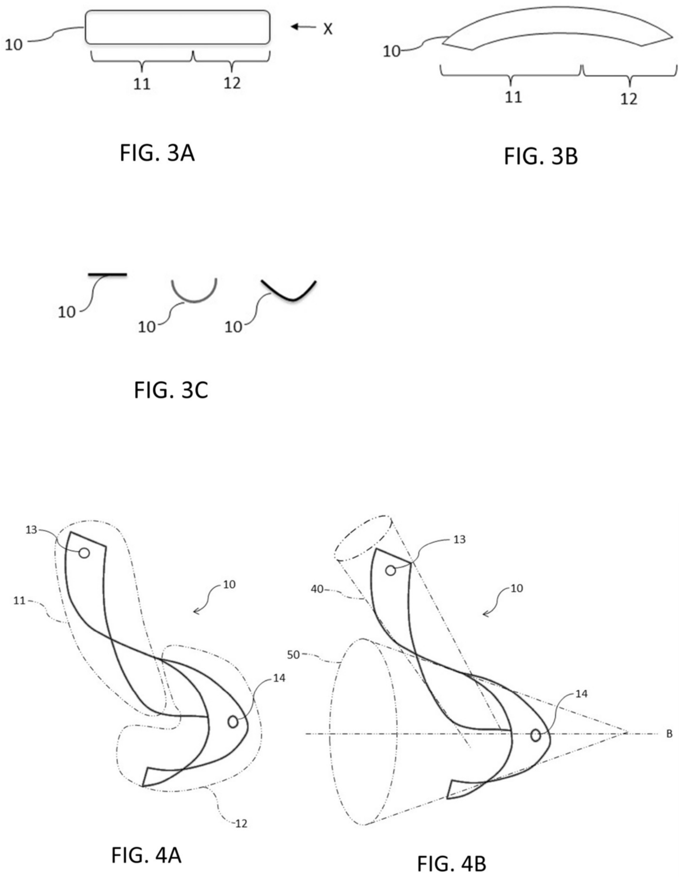

The elongated body 10 may be substantially rectangular or may be arcuate (bow -shaped). FIG. 3A illustrates an example of a substantially rectangular body 10, a nd FIG. 3B illustrates an example of an arcuate (bow-shaped) body 10. The oppo site end portions of the body 10 may be formed into polygonal shapes or curved shapes. For example, the ends may be formed as quadrilaterals to provide a sub stantially rectangular shape, or as triangles or polygons having five or more sides. The ends may also be formed as semicircular, semi-elliptical, or any other curv ed shape. Additionally, the two end portions may not have the same shape; the s hape of one end may differ from the other. By varying the shape of the body 10, the water resistance and rotational speed can be adjusted, reflective surfaces ca n be increased, and lures that imitate various fish body shapes can be achieved.

FIG. 3C is a view taken in the direction of arrow X in FIG. 3A, in which the left view shows a flat shape, the center view shows a substantially semicircular shap e, and the right view shows a concave shape (any arbitrary concave shape). The short-width direction of the body 10 may be curved in any manner. In the case o f a flat shape, the body is easy to process. In contrast, when the body is formed in a substantially semicircular or concave shape, the water resistance of the lure 1 can be further increased, thereby increasing the rotation speed in water and i ncreasing the number of reflective surfaces. Such shapes also enable the lure to more closely simulate various fish shapes, as described above.

FIG. 4 is an explanatory view illustrating the curved state of the body 10. The b ody 10 includes a first curved portion 11 and a second curved portion 12, and is formed into a substantially J-shaped configuration. As shown in FIG. 4A, the first curved portion 11 and the second curved portion 12 may not have a distinct bou ndary, and the two curved portions may be formed continuously or discontinuously. A portion of the first curved portion 11 and the second curved portion 12 may also overlap. The first curved portion 11 functions as a rudder, while the second curved portion 12 functions as a paddle. Increasing the proportion of the second curved portion 12 increases water resistance, thereby increasing rotational speed and enhancing water vibration.

As shown in FIG. 4B, the first curved portion 11 is formed so as to constitute p art of a helical curved portion, and the second curved portion 12 is formed along the lateral surface of a conical or pyramidal portion so as to constitute a part the reof. In the illustration of FIG. 4B, the first curved portion 11 is formed along the outer surface of a substantially cylindrical body 40 so as to constitute part of a helical curved portion; however, the first curved portion 11 may instead be formed along the outer surface of a cone or a pyramid.

As shown in FIG. 4B, the second curved portion 12 is formed along the lateral surface of a conical portion so as to constitute a part thereof. The conical or pyr amidal body used to form the second curved portion 12 is not limited to a circula r cone but may be a pyramidal body, and may be either a right cone/pyramid or an oblique cone/pyramid. The second curved portion 12 may be formed not only f rom a portion of a pointed cone or pyramid but also from a frustum (a truncated conical or pyramidal body). The first curved portion 11 may be formed so as to c onstitute a part of a helix along the conical or pyramidal body used to form the s econd curved portion 12.

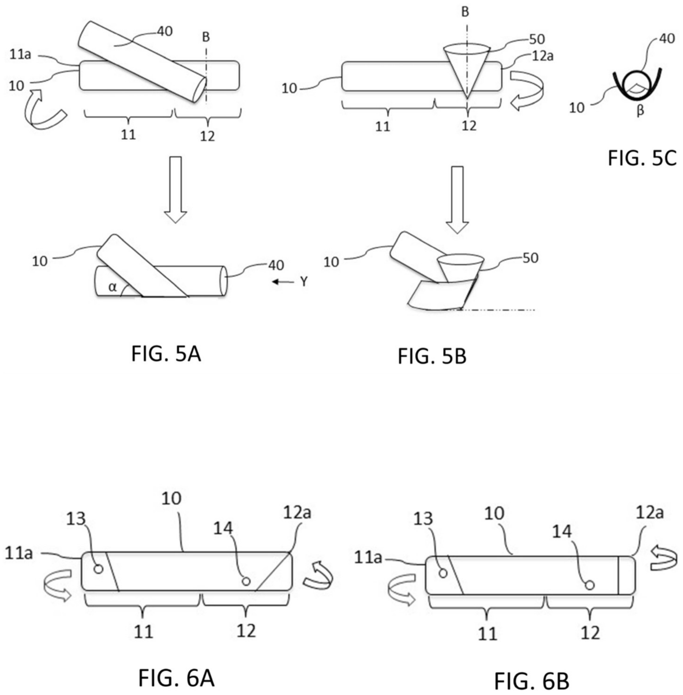

FIG. 5 is an explanatory view illustrating details of the curved state of the body 10. FIG. 5A illustrates the forming of the first curved portion 11, FIG. 5B illustrat es the forming of the second curved portion 12, and FIG. 5C is a view taken in t he direction of arrow Y in FIG. 5A. The description below assumes, as an examp le, that the body 10 is substantially rectangular. For a body 10 having an arcuate (bow-shaped) form, the lengths of the inner and outer sides of the arc differ, an d therefore the appearance and functional effects differ depending on whether the arc is bent toward the inner side or toward the outer side. The arc-shaped body 10 may be bent in either direction, and two types of lures 1 having different ext ernal appearances and functional effects can thus be produced.

As shown in the lower view of FIG. 5A, the first curved portion 11 is formed so as to constitute part of a helical curved portion along the outer surface of the cyl indrical body 40, such that the twist angle α with respect to a horizontal plane is, for example, in the range of 10° to 85°. In the explanatory views of FIGS. 5A a nd 5B, the first curved portion 11 and the second curved portion 12 are illustrate d separately for clarity; however, as described above, these portions may overlap. In this embodiment, the first curved portion is a helical curved portion having a rotation angle β between 30 and 396 degrees about an axis of the helical curved portion (see FIG. 5C). The helical curved portion extends from a tip end of the f irst curved portion toward a virtual longitudinal axis B passing through an apex of the second curved portion 12 (see FIGS. 4B and 5A). In some embodiments, th e rotation angle β may be between 90 and 220 degrees. Within this range, a lar ger rotation angle β enables more continuous rotation, whereas a smaller rotation angle β produces stronger water vibration and light reflection. It should be unders tood that the above numerical range is not limited to this embodiment and may b e appropriately modified as appropriate. In addition, although, in the present emb odiment, a portion of the first curved portion overlaps with a portion of the secon d curved portion, the curved portions may alternatively be formed without any ove rlapping portions.

As shown in the lower view of FIG. 5B, the second curved portion 12 in this e mbodiment is formed so as to constitute a part of a conical body 50 along its lat eral surface. The second curved portion is a substantially conical or pyramidal po rtion having a rotation angle between 40 and 175 degrees about an axis of the s ubstantially conical or pyramidal portion (corresponding to the angle β in FIG. 5C). In some embodiments, the rotation angle may be between 90 and 165 degrees. These angular ranges are not limited to this embodiment and may be appropriatel y modified as appropriate. In this embodiment, when the lure 1 rotates at high sp eed, the first curved portion 11 appears as the head and body of a fish, and the second curved portion 12 appears as the tail of the fish. Accordingly, the conical body 50 may be in the form of a cone.

FIG. 6 is an explanatory view illustrating a method for forming the fine-adjustme nt portions of the lure 1. As shown in FIGS. 6A and 6B, at least one of the opp osite end portions of the body 10, including the end portion 11a of the first curve d portion 11 or the end portion 12a of the second curved portion 12, may be be nt to form a substantially quadrilateral or triangular shape. The larger the area of the quadrilateral or triangular bent portions 11a and 12a and the greater the ben ding angle, the greater the water resistance becomes, which in turn affects the ro tational speed of the lure. Both the end portion 11a and the end portion 12a may be bent, or only one of them may be bent.

The end portion 11a of the first curved portion 11 may be bent so as to form a quadrilateral shape (including a trapezoid or an irregular quadrilateral), with the b ending direction oriented toward the inner side of the helical curve, and the bendi ng angle adjusted to approximately 0 to 70 degrees. By bending the end portion 11a of the first curved portion 11, the shape of the fish head represented by the lure 1 during rotation can be slightly modified. In particular, when a rotation shaft is used (as in Embodiment 3), the bending adjustment enables a more linear an d smooth rotational motion.

The end portion 12a of the second curved portion 12 may be bent to form a qu adrilateral or triangular shape, and the bending direction may be either inward or outward. The bending angle may be adjusted to approximately ±0 to 20 degrees, and more specifically ±0 to 15 degrees. By bending the end portion 12a into a q uadrilateral or triangular shape, the shape of the fish tail represented during rotati on can be slightly modified, and the water resistance, rotational speed, rotational radius, hydrodynamic vibration, light reflection, and horizontal posture can be finel y adjusted. In the present embodiment, since the fishing hook 30 is connected to the second curved portion 12, the end portion 12a may be triangular rather than quadrilateral, as this facilitates rotational speed adjustment and maintenance of a horizontal posture during rotation. However, in the case where a rotational membe r 20 is connected to the second curved portion 12 (as in Embodiment 2 describe d later), that the end portion 11a may be quadrilateral and the end portion 12a may also be quadrilateral.

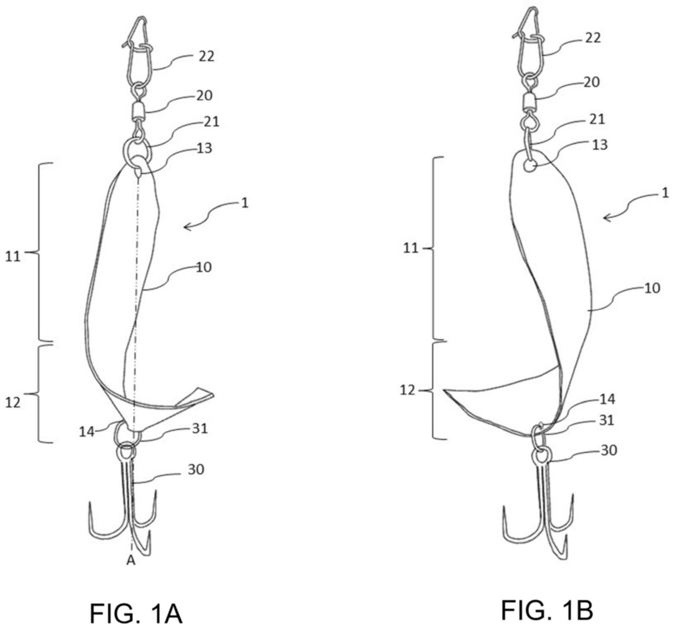

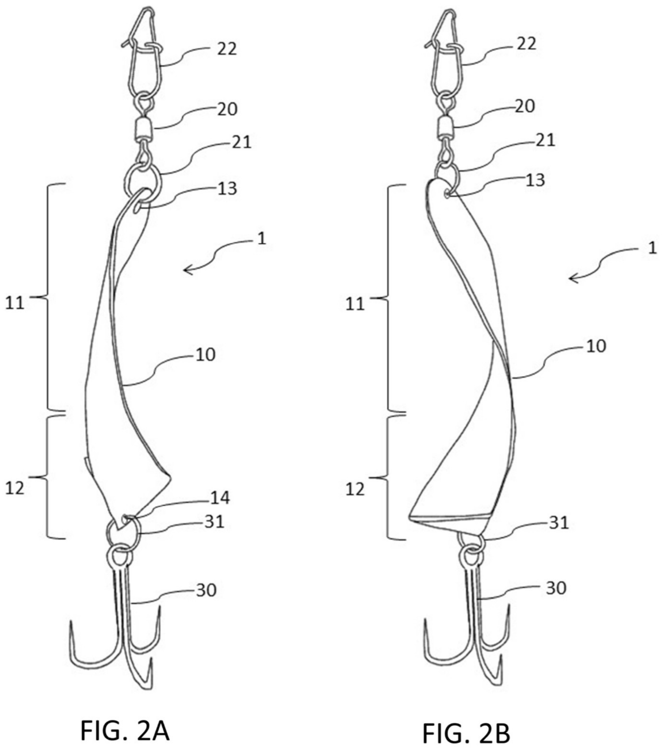

As shown in FIGS. 1A to 2B, a first connection structure 13 is provided on the first curved portion 11, and a second connection structure 14 is provided on the second curved portion 12. The connection structures 13 and 14 may employ any configuration capable of connecting to the rotational member 20 or a fishing hook 30, including welding, the use of a through-hole and a connecting ring, or other suitable means or tools. In the present embodiment, the first connection structure 13 and the second connection structure 14 are implemented as through-holes for med in the body, and the rotational member 20 and the fishing hook 30 are conn ected via connecting rings passed through the respective through-holes. Hereinaft er, the first connection structure 13 and the second connection structure 14 will b e referred to as the first through-hole 13 and the second through-hole 14, respect ively.

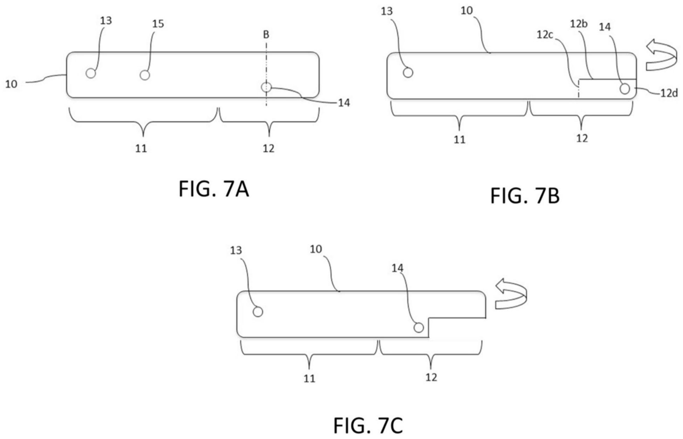

FIGS. 7A and 7B are explanatory views showing the positions of the through-hol es 13 and 14 formed in the body 10. The positions of the through-holes 13 and 14 are not particularly limited; however, in the present embodiment, as shown in FIGS. 7A and 7B, the first through-hole 13 is provided at a tip end portion of the first curved portion 11, and the second through-hole 14 is provided at a substan tially apex portion of the second curved portion 12, which is formed along the lat eral surface of a conical or pyramidal portion so as to constitute a part thereof. By providing the first through-hole 13 and the second through-hole 14 at the posi tions shown in FIG. 7A, the lure 1 rotates about a virtual rotation axis passing th rough the first through-hole 13 and the second through-hole 14 or a vicinity there of, so that the lure 1 rotates smoothly and a fish-like appearance can be achieve d. As used herein, the term "virtual rotation axis" refers to an imaginary axis abo ut which the lure rotates when pulled through water, the axis passing through on e or both of the through-holes depending on the connection configuration and the curved shape of the body.

As shown in FIG. 7A, at least one third connection structure (third through-hole) 15 may additionally be provided in the first curved portion 11. In the example illu strated in FIG. 7A, one third through-hole 15 is provided approximately at a centr al region of the first curved portion 11. A plurality of third through-holes 15 may be provided. By providing the third through-hole 15, an additional hook can be att ached to the lure 1. Alternatively, the third through-hole 15 may be used to recei ve the tip of the fishing hook 30, thereby fixing the fishing hook 30 in place. Wh en the tip of the fishing hook 30 is inserted into the body 10 and retained, the fi shing hook 30 and the lure 1 become integrated, which reduces the likelihood of the fishing line becoming tangled when the lure 1 is cast a long distance. It is n oted that the third through-hole 15 is not an essential component in one or more embodiments of the present invention, and is not provided in the present embodi ment.

As shown in FIG. 7B, a cut 12b may be formed at the end portion of the secon d curved portion 12, and the second through-hole 14 may be provided in a portio n 12d that is bounded by the cut 12b and an imaginary line 12c. The portion 12 d is left unbent, and the remaining portion of the second curved portion 12 is wo und into a conical or pyramidal shape, thereby reducing the weight of the conical or pyramidal portion of the second curved portion 12 and allowing the lure 1 to r otate more readily. As a result, the lure 1 can more easily maintain a horizontal posture. Alternatively, as shown in FIG. 7C, the portion 12d in FIG. 7B may be r emoved. In this case, the position of the second through-hole 14 becomes the sa me as that in FIG. 7A. By removing the portion 12d, the same effects as those i n the case shown in FIG. 7B can be obtained.

As shown in FIGS. 1A to 2B, the first through-hole 13 is connected to either the rotating body 20 or the fishing hook 30, and the second through-hole 14 is conn ected to the rotational member 20 or the fishing hook 30 that is not connected to the first through-hole 13. In the present embodiment, the first through-hole 13 is connected to the rotational member 20, and the second through-hole 14 is conne cted to the fishing hook 30.

More specifically, a connecting ring 21 (e.g., a split ring) is passed through a ri ng of a rotational member 20 (for example, a swivel) to which a line connector 2 2 of a fishing line is attached, and the connecting ring 21 is also passed through the first through-hole 13, whereby the rotational member 20 is connected to the lure 1. Likewise, a connecting ring 31 is passed through a ring of a fishing hook 30, and the connecting ring 31 is also passed through the second through-hole 1 4, whereby the fishing hook 30 is connected to the lure 1. In the present embodi ment, as shown in FIGS. 1A to 2B, the fishing hook 30 is illustrated as a treble hook in which three hook points are welded together; however, a single hook ma y be used, and any type of hook may be employed. By using a treble hook, the likelihood that one of the hook points will catch in the mouth of a fish is increas ed, thereby improving the fish landing rate.

Since the lure 1 is configured as described above, when the first curved portion 11 is pulled in water or on the water surface, the water flow introduced into the helical curved portion of the first curved portion 11 flows from the wide truncated conical or pyramidal side toward the narrow conical or pyramidal apex side of the second curved portion 12. High-speed rotation is produced by the impact and re sistance of the water flow, depending on the bend angle of the conical or pyrami dal portion and the radius of the helical curved portion.

As shown in FIGS. 1A to 2B, a characteristic feature of the present embodiment is that the lure 1 does not include a rotation shaft. The lure 1 rotates about a v irtual rotation axis A that passes through at least one of the first through-hole 13 or the second through-hole 14 in response to rotation of the rotational member 20. In the present embodiment, as illustrated in FIG. 1A, a virtual rotation axis A passes through the first through-hole 13 but does not pass through the second th rough-hole 14; however, the lure may alternatively be configured such that the vir tual rotation axis passes through both through-holes. When the lure 1 rotates abo ut the virtual rotation axis A, the first curved portion 11 and the second curved p ortion 12 appear expanded outward, thereby enabling the lure as a whole to exhi bit a fish-like appearance.

In this embodiment, as shown in FIG. 10A, when the lure 1 rotates at high spee d, the lure assumes an appearance resembling either a plump fish or a slender fi sh. By adjusting the helical angle of the first curved portion 11 and the bending angle of the second curved portion 12, as well as the width and length of the m aterial, it is possible to achieve fish-like appearances of various sizes and shapes, such as a plump fish or a slender fish, and to adjust the rotational speed accor dingly. In particular, when the helical angle of the first curved portion 11 is large, the resulting appearance resembles a plump fish, whereas when the helical angl e is small, the resulting appearance resembles a slender fish. Further, by adding color or engraving to the body of the lure 1, a variety of fish-like appearances ca n be achieved. The lure 1 of the present embodiment can be effectively used ev en in dark water due to water vibration, bubbles, splashing, and light reflection g enerated by rapid rotation.

### Second Embodiment

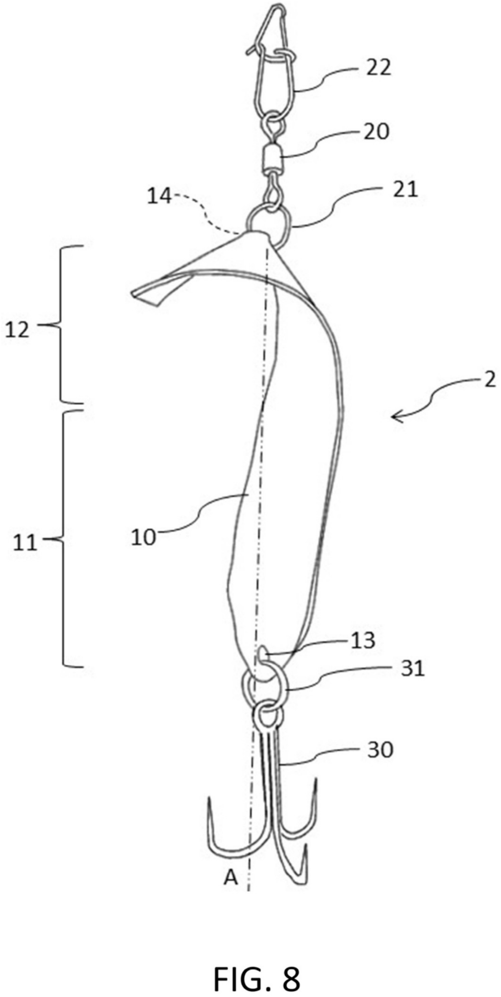

A second embodiment of the present invention will be described with reference t o FIG. 8. As shown in FIG. 8, a lure 2 according to the present embodiment has the same material and structure as the lure 1 of the first embodiment. Therefore, descriptions of the same components are omitted, and differences from the lure 1 of the first embodiment and the effects thereof will be explained.

As shown in FIG. 8, in the lure 2 according to this embodiment, the connections of the rotational member 20 and the fishing hook 30 are reversed relative to the lure 1 according to the first embodiment. That is, the first through-hole 13 provid ed in the first curved portion 11 is connected to the fishing hook 30, and the sec ond through-hole 14 provided in the second curved portion 12 is connected to th e rotational member 20. More specifically, a connection ring 21 is passed through a ring of the rotational member 20 to which a line connector 22 is attached, an d the connection ring 21 is also passed through the second through-hole 14. Like wise, a connection ring 31 is passed through a ring of the fishing hook 30 and a Iso through the first through-hole 13, thereby connecting these components. As in the first embodiment, at least one third through-hole 15 may also be provided in the first curved portion 11.

As shown in FIG. 8, the lure 2 according to the present embodiment also does not include a rotation shaft. The virtual rotation axis A passes through the secon d through-hole 14, but does not pass through the first through-hole 13. However, the lure may alternatively be configured such that the virtual rotation axis passes through both through-holes. When the lure 2 rotates about the virtual rotation axis A, the second curved portion 12 appears as the head of a fish, and the first cur ved portion 11 appears as the body and tail of the fish.

In this embodiment, because the lure 2 is connected as described above, the bo dy 10 may have a rectangular shape and that the body 10 is flat in the short-sid e direction, or is curved in a substantially semicircular or concave shape. The se cond curved portion may also be formed along a side surface of a conical or pyr amidal shape so as to constitute a substantially conical or pyramidal portion. The end portion 11a of the first curved portion 11 is bent inward so as to form a qua drilateral shape (including a trapezoid or an irregular quadrilateral), thereby functi oning as a paddle, and allowing the rotational speed, the width of the tail portion, and the water resistance to be adjusted. Furthermore, as for the end portion 12 a of the second curved portion 12 (see FIGS. 6A and 6B), it may be bent into a quadrilateral shape as described above. The bending angle is the same as in the first embodiment.

In the case of the lure 2 according to this embodiment, when the lure enters th e water, the apex side of the second curved portion 12 (paddle) first strikes the water flow, and subsequently the helical curved portion of the first curved portion 11 (rudder) comes into contact with the water flow. As a result, the lure 2 rotate s at high speed about the virtual rotation axis A due to the water resistance acti ng on these portions. During this rotation, the second curved portion 12 functions as the heavy head portion of a fish, thereby allowing the lure to exhibit a streaml ined, horizontally-stable swimming posture similar to that of a slender fish, such a s an arrow or dart. As in the first embodiment, when the helical angle of the first curved portion 11 is large, a plump, rounded fish form can be achieved, wherea s when the helical angle is small, a slender fish form can be achieved. Furtherm ore, by adjusting the bending angles of the end portion s 11a and 12a, the rotati onal speed and other dynamic characteristics of the lure 2 can be controlled. In addition, by applying color or engraving to the lure body, various fish-like appeara nces can be achieved, similarly to the first embodiment.

In this embodiment, the lure 2 is capable of representing a slender fish having a head shaped like an arrow or dart, and moves in water in a manner that appe ars to pierce forward head-first while maintaining a substantially linear and horizo ntal swimming posture. By adjusting the dimensions of the lure, the appearance o f a juvenile fish can also be achieved. Compared to the lure 1, the lure 2 experi ences less water resistance, reducing strain on the user and making it suitable fo r prolonged fishing. Accordingly, the lure 2 is particularly useful for stream fishing.

### Third Embodiment

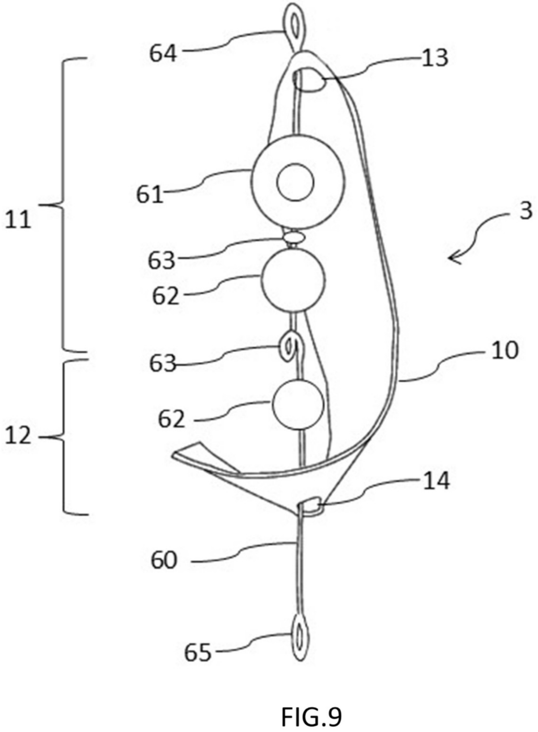

A third embodiment of the present invention will be described with reference to FIGS. 9 and 10B. As shown in FIG. 9, a lure 3 according to this embodiment is made of the same material and has the same shape as the lures 1 and 2 accord ing to the first and second embodiments, except that the lure 3 additionally includ es a rotation shaft 60, beads 61 and 62, a retaining portion 63, and a weight (no t shown). As in the first and second embodiments, the end portion 11a of the firs t curved portion 11 and the end portion 12a of the second curved portion 12 ma y be finely adjusted (see FIGS. 6A and 6B). Likewise, as in Embodiments 1 and 2, at least one third through-hole 15 may be provided in the first curved portion 11. Accordingly, descriptions of features common to the first and second embodim ents are omitted, and differences from the lures 1 and 2 and the effects thereof will be described below.

In this embodiment, since the body 10 of the lure 3 rotates about the rotation s haft 60, the rotational member 20 (such as a swivel) used in the first and second embodiments is not included. The lure 3 can be used by passing a hook or a fi shing line through holes 64 and 65 provided at both ends of the rotation shaft 60.

The rotation shaft 60 may be formed of a metallic material such as aluminum, ir on, copper, or stainless steel. As shown in FIG. 9, the rotation shaft 60 is linear in this embodiment, but it may alternatively be curved. The rotation shaft 60 is c onfigured to pass through at least one of the first through-hole 13 or the second through-hole 14. In the present embodiment, the rotation shaft 60 passes through both the first through-hole 13 and the second through-hole 14; however, the rotati on shaft 60 may be configured to pass through only the first through-hole 13 or only the second through-hole 14. Further, a retaining portion 63 may be provided on the rotation shaft 60 so as to retain the positions of the beads 61 and 62. Th e retaining portion 63 may be formed, for example, by bending the rotation shaft 60 as shown in FIG. 9, or by using a stopper component. In the illustrated embo diment, a retaining portion (stopper) 63 is disposed between the bead 61 and the bead 62, and another retaining portion (formed by bending) 63 is disposed betw een the bead 62 and the bead 62.

The beads 61 and 62 may not be provided on the rotation shaft 60; however, b y including the beads 61 and 62, the lure 3 can express the appearance of fish eyes or patterns when rotating at high speed, as shown in FIG. 10B. Only the be ad 61 corresponding to a fish eye may be provided, or only the bead 62 corresp onding to a fish pattern may be provided. Three or more beads may also be use d. The beads 61 and 62 may be commercially available beads made of plastic or the like, and two or more colors may be used, and beads having patterns may also be used. By using beads of various colors and patterns, it is possible to ac hieve a colorful fish-like appearance. Even in cases where the rotation shaft 60 p asses only through the first through-hole 13, or only through the second through-hole 14, the beads 61 and 62 can be arranged so as to be retained, thereby still representing fish eyes or patterns when the lure rotates. The water resistance a nd weight of the lure 3 can be adjusted by the number of beads and the length of the rotation shaft 60. Alternatively, a weight may be used instead of the beads, or both beads and a weight may be used.

The lure 3 according to the present embodiment is characterized in that, by prov iding the beads 61 and 62, the lure 3 can represent the eyes or patterns of a fis h when rotated at high speed, thereby achieving a more fish-like appearance. In addition, friction between the beads produces loud sound, and rotation induces vi bration, thereby increasing the likelihood of generating large bubbles and splashes. Such sound, bubbles, and splashes can attract fish even from a long distance. Furthermore, the number of auxiliary components such as the rotational member 20 (swivel) can be reduced, allowing the lure to be configured in a more compact and cost-effective manner.

### Fourth Embodiment

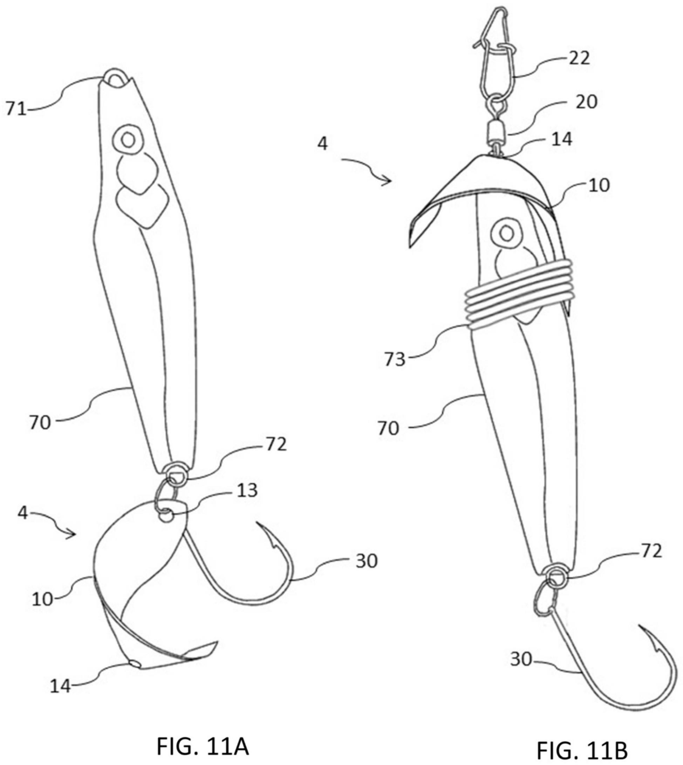

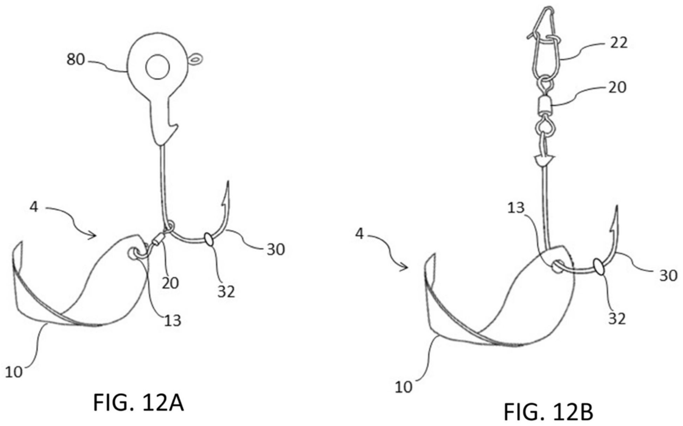

The fourth embodiment of the invention will be described with reference to FIGS. 11A to 12B. The structure according to the embodiment of present invention can be used as a blade that is attached to a commercially available lure or hook. FI G. 11A shows an example in which the blade 4 is attached to the tail portion of a commercially available lure 70, and FIG. 11B shows an example in which the b lade 4 is attached to the head portion of the commercially available lure 70. FIG. 12A shows an example in which the blade 4 is attached to a jig head 80, and FIG. 12B shows an example in which the blade 4 is attached to a fishing hook 3 0 having a rotational member 20 (swivel).

As in the lures of Embodiments 1 to 3, the blade 4 is formed by bending an el ongated body having polygonal or curved end portions, and includes a first curve d portion and a second curved portion. The first curved portion is a helical curve d portion, and the second curved portion is formed so as to constitute a part of a conical or pyramidal portion along its lateral surface. At least one of a first con nection structure 13 on the first curved portion 11 or a second connection structu re 14 on the second curved portion 12 is provided. The blade 4 may be produce d by adjusting the dimensions of the lures 1 and 2, and may be provided with b oth the first connection structure 13 and the second connection structure 14, or w ith only one of them. Any means may be used as the connection structures 13 a nd 14. In this embodiment, as in the previous embodiments, the connection struct ures 13 and 14 are provided as through-holes. A third through-hole 15 may also be provided in the first curved portion 11.

As shown in FIGS 11A to 12B, when the blade 4 is attached in the first curved portion in the same manner as in Embodiment 1, the body 10 may have an arcu ate shape, and the body 10 may be flat in the short-side direction or may be cur ved downward in a substantially semicircular or concave shape. Meanwhile, when the blade 4 is attached in the second curved portion, the body 10 may have a re ctangular shape, and the body 10 may be flat in the short-side direction or may be curved in a substantially semicircular or concave shape.

In this embodiment, the blade 4 shown in FIG. 11A is provided with the through -holes 13 and 14, whereas the blade 4 shown in FIG. 11B is provided only with the through-hole 14. The positions of the through-holes 13 and 14 are not particu larly limited; however, in this embodiment, the through-hole 13 is provided at the tip end of the first curved portion 11, and the through-hole 14 is provided at a s ubstantially apex portion of the second curved portion 12, which is formed so as to constitute a part of a conical or pyramidal portion along its lateral surface.

In FIG. 11A, the blade 4 is attached to an eye 72 at a tail portion of the comm ercially available lure 70 via a ring of the fishing hook 30. The eye 71 at a head portion of the commercially available lure 70 is attached to a rotational member via a connecting ring (not shown). The fishing hook 30 may alternatively be fixed by inserting a tip of the fishing hook 30 into the through-hole 14 of the blade 4 ( not shown). In this embodiment, the fishing hook 30 is not fixed in this manner; however, when fixation is desired, the through-hole 14 is formed at a location an d with a size allowing the tip of the fishing hook 30 to be inserted. By inserting t he tip of the fishing hook 30 into the blade 4, the blade 4 and the fishing hook 30 can be integrated, thereby reducing the likelihood of the fishing line becoming tangled.

In FIG. 11B, the blade 4 is secured by passing the commercially available lure 70 through the second through-hole 14 provided substantially at a central portion in the longitudinal direction of the second curved portion 12 (corresponding to a s ubstantially apex portion of the conical or pyramidal portion), the second through-hole 14 receiving the eye 71 at the head portion of the commercially available lur e 70 (or a ring of a rotational member 20 connected thereto). The method of fixa tion is not particularly limited; however, in this embodiment, the blade 4 is secure d using a rubber band 73. By securing the blade 4 in this manner, the commerci ally available lure 70 can be caused to rotate, thereby enabling a rotating-type co mmercially available lure 70 to be easily produced. In the examples shown in FIG S. 11A and 11B, the blade 4 is attached to either the head portion or the tail po rtion of the commercially available lure 70; however, the blade 4 may be attached to both portions. By attaching the blade 4 such that the second through-hole 14 passes through the connecting ring 31 of the fishing hook 30, the fishing hook 30 may also be caused to rotate.

As shown in FIG. 12A, one ring of the rotational member 20 is passed through the fishing hook 30 of the jig head 80, and the other ring of the rotational memb er 20 is passed through the through-hole 13 of the blade 4, thereby connecting t he blade 4 to the fishing hook 30. The fishing hook 30 is provided with a retaini ng portion 32 that prevents the one ring of the rotational member 20 from diseng aging. In FIG. 12B, the blade 4 is attached to the fishing hook 30 provided with the rotational member 20. Similar to FIG. 12A, a retaining portion 32 is provided to prevent the blade 4 from disengaging from the fishing hook 30. The blade 4 m ay also be fixed to the fishing hook 30 by inserting the hook tip into a through-h ole 14 formed in the blade 4 (not shown). Furthermore, the blade 4 may be attac hed by passing the through-hole 13 of the blade 4 together with the ring of the fi shing hook 30 through the ring of the rotational member 20, and fixing the fishin g hook 30 by inserting its tip into the through-hole 14 (not shown).

The blade 4 according to one or more embodiments of the present invention can also be attached to commercially available lures and hooks other than those sho wn in FIGS. 11A to 12B, such as spoons, jigs, inline spinners, and spinnerbaits. When used in a Texas rig or a drop-shot rig, the blade 4 allows long-distance ca sting even when it is small and lightweight. The blade 4 readily rotates, and duri ng rotation reflects light and generates water vibrations, splashes, and bubbles, th ereby attracting fish. In addition, the swimming posture of the lure to which the b lade 4 is attached can be adjusted so that it maintains a substantially horizontal orientation in water. Furthermore, by attaching the blade 4, the sinking speed of t he lure or hook can be reduced, and the sinking trajectory can be varied, thereby effectively creating the appearance of a dying or weakened fish.

As described above, the lure and blade according to one or more embodiments of the present invention exhibit high rotational speed and can achieve fish-like ap pearances of various sizes. Accordingly, the lure and blade can be used in variou s fishing environments, such as the sea, rivers, lakes, and mountain streams, and are suitable for catching various types of fish, including bass. In addition, becau se the lure can maintain a stable, substantially horizontal swimming posture in wa ter, it can more closely simulate the natural swimming behavior of fish. In some cases, a fish-like motion can also be achieved through the action of airflow. Furth ermore, the curved portions of the lure and blade provide strong light reflection, enabling the lure to effectively attract fish.

The lure and blade according to one or more embodiments of the present invent ion have a simple structure, allowing manufacturing costs to be reduced and maki ng the structures according to one or more embodiments of the invention suitable for industrial applications. By combining the blade according to one or more emb odiments of the present invention with commercially available lures such as spoon s, jigs, inline spinners, and spinnerbaits, the issues associated with such existing lures can be addressed, and improved lure performance can be achieved. Accordi ngly, one or more embodiments of the present invention expand the diversity and range of applications of fishing lures.

The configurations of the lures and blades in the above embodiments are not li mited thereto, and may be appropriately modified within the scope of the inventio n.

### Description of Reference Numerals

1, 2, 3 lure
4 blade
10 main body
11 first curved portion
12 second curved portion
13 first through-hole (connection structure)
14 second through-hole (connection structure)
15 third through-hole (connection structure) 20 rotational member
21 connecting ring
22 line connector
30 fishing hook
31 connecting ring
32 retaining portion
40 cylindrical body
50 conical body
60 rotation shaft
61, 62 bead
63 retaining portion
64, 65 holes of rotation shaft
70 commercially available lure
71, 72 eye
73 rubber band
80 jig head
11a end portion of first curved portion
12a end portion of second curved portion
12b cut
12c imaginary line
12d portion that is bounded by the cut and an imaginary line
A virtual rotation axis
B virtual longitudinal axis passing through the apex of the second curved portion

## Claims

1. A lure comprising:
an elongated body having opposite end portions in a polygonal shape or a curve d shape, the elongated body being curved and including a first curved portion an d a second curved portion,
wherein the first curved portion is part of a helical curved portion,
the second curved portion is part of a substantially conical or pyramidal portion;
a first connection structure on the first curved portion; and
a second connection structure on the second curved portion;
wherein one of the first connection structure or the second connection structure is
connected to a rotational member, and the other is connected to a hook, and
wherein the lure does not include a rotation shaft and rotates about a virtual rota tion axis passing through at least one of the first connection structure or the sec ond connection structure in response to rotation of the rotational member.

2. The lure according to claim 1,
wherein the first curved portion defines a rotation angle about an axis of the heli cal curved portion between 30 degrees and 396 degrees, and
wherein the second curved portion defines a rotation angle about an axis of the substantially conical or pyramidal portion between 40 degrees and 175 degrees.

3. A lure comprising:
an elongated body having opposite end portions in a polygonal shape or a curve d shape, the elongated body being curved and including a first curved portion, a second curved portion, and a rotation shaft,
wherein the first curved portion is part of a helical curved portion,
the second curved portion is part of a substantially conical or pyramidal portion,
a first connection structure on the first curved portion; and
a second connection structure on the second curved portion,
wherein the lure rotates about the rotation shaft passing through at least one of t he first connection structure or the second connection structure.

4. The lure according to claim 3,
wherein the first curved portion defines a rotation angle about an axis of the heli cal curved portion between 30 degrees and 396 degrees, and
wherein the second curved portion defines a rotation angle about an axis of the substantially conical or pyramidal portion between 40 degrees and 175 degrees.

5. The lure according to claim 1,
wherein the first connection structure is located at a tip end of the first curved p ortion, and the second connection structure is located at a substantially apex port ion of the substantially conical or pyramidal portion of the second curved portion.

6. The lure according to claim 1,
wherein at least one of the opposite end portions of the elongated body is bent i n a quadrilateral shape or a triangular shape.

7. The lure according to claim 3,
wherein the first connection structure is located at a tip end of the first curved p ortion, and the second connection structure is located at a substantially apex port ion of the substantially conical or pyramidal portion of the second curved portion.

8. The lure according to claim 3,
wherein at least one of the opposite end portions of the elongated body is bent i n a quadrilateral shape or a triangular shape.

9. A blade comprising:
an elongated body having end portions in a polygonal shape or a curved shape, the elongated body being curved and including a first curved portion and a secon d curved portion,
wherein the first curved portion is part of a helical curved portion,
the second curved portion is part of a substantially conical or pyramidal portion,
at least one of a first connection structure on the first curved portion or a secon d connection structure on the second curved portion.

10. The lure according to claim 9,
wherein the first curved portion defines a rotation angle about an axis of the heli cal curved portion between 30 degrees and 396 degrees, and
wherein the second curved portion defines a rotation angle about an axis of the substantially conical or pyramidal portion between 40 degrees and 175 degrees; a nd

11. The blade according to claim 9,
wherein the first connection structure is located at a tip end of the first curved p ortion, and the second connection structure is located at a substantially apex port ion of the substantially conical or pyramidal portion of the second curved portion.

12. The blade according to claim 9,
wherein at least one of the opposite end portions of the elongated body is bent i n a quadrilateral shape or a triangular shape.

13. The blade according to claim 11,
wherein at least one of the opposite end portions of the elongated body is bent i n a quadrilateral shape or a triangular shape.
